# EUROPÄISCHE PATENTSCHRIFT

(11) **EP 4 122 676 B1**
(45) Veröffentlichungstag und Bekanntmachung des Hinweises auf die Patenterteilung: **28.08.2024**
(21) Anmeldenummer: 21187477.1
(22) Anmeldetag: 23.07.2021
(51) Int. Cl.: B29C 63/00, A47B 96/20, B27M 3/00, B29C 65/02, B29C 65/14, B29C 65/48, B29C 65/50, B29C 65/00, B32B 27/08, B32B 27/12, B32B 27/32, C09J 7/35, C09J 123/10, C09J 123/12, A47B 13/08, B27D 5/00, B29C 65/08, B29C 65/10, B32B 9/02, B29L 31/00

(54) **KANTENLEISTE UND VERFAHREN ZUR HERSTELLUNG EINER KANTENLEISTE**
EDGE STRIP AND METHOD FOR THE PRODUCTION OF AN EDGE STRIP
BAGUETTE DE BORDURE ET PROCÉDÉ DE FABRICATION D'UNE BAGUETTE DE BORDURE

(43) Veröffentlichungstag der Anmeldung: 25.01.2023
(73) Patentinhaber: Fritz Egger GmbH & Co. OG, 6380 St. Johann in Tirol (AT)
(72) Erfinder: Streichardt, Thomas, 48231 Warendorf (DE); Schwermer, Peter Florian, 57399 Kirchhundem (DE)
(74) Vertreter: Cohausz & Florack

(56) Entgegenhaltungen:
- EP-B1- 3 114 186
- DE-A1- 102014 109 750
- DE-B2- 1 694 034
- DE-U1- 202014 106 173
- US-A- 3 418 396
- US-A1- 2009 142 610
- US-A1- 2011 020 634
- US-B2- 8 287 949

## Beschreibung

### TECHNISCHES GEBIET DER ERFINDUNG

Die Erfindung betrifft eine Kantenleiste, insbesondere für Möbelstücke, umfassend eine Strukturschicht und mindestens eine Funktionsschicht zum Befestigen der Kantenleiste an eine Schmalseite eines Werkstücks, insbesondere eines Möbelstücks. Die Erfindung betrifft ferner ein Verfahren zur Herstellung von Kantenleisten, die Verwendung einer hierin beschriebenen Funktionsschicht als bandförmiger Schmelzkitt, ein Werkstück, insbesondere ein Möbelstück, umfassend eine erfindungsgemäße Kantenleiste sowie einen bandförmigen Schmelzkitt.

### TECHNISCHER HINTERGRUND DER ERFINDUNG

Kantenleisten zum Abdecken der Schmalflächen von offenen Platten, insbesondere Fronten, Arbeitsplatten, Korpusse, Einlegeböden und Wangensysteme sind bekannt. Als Material für die Kanten werden zum Beispiel PVC-, ABS-, PP- oder PMMA-Kunststoffe verwendet. Übliche Wandstärken derartiger Kantenleisten betragen 0,4 bis 3 mm. Die Kantenleisten werden normalerweise auf die Schmalseiten der Platten geklebt.

Häufig handelt es sich bei den Kantenleisten um thermoplastische Kantenleisten.

Die Kantenleisten können auf verschiedene Art und Weise auf die Platten geklebt werden. So ist es im Stand der Technik bekannt, die Kantenleisten mit einem Schmelzkleber auf die Platten, vor allem auf die Schmalseite der Platten, zu kleben. Die Verklebung der Kantenleiste auf der Schmalseite der Platte erfolgt dabei vollflächig.

Um den Aufwand beim Aufbringen und bei den Vorrichtungen zum Anbringen der Kantenleisten zu verringern, sind im Stand der Technik ferner Kantenleisten bekannt, die bereits eine Schmelzschicht umfassen. Die Schmelzschicht kann auch als Funktionsschicht bezeichnet werden. Das Vorhandensein der Schmelzschicht erlaubt es, dass die Kantenleiste beispielsweise mittels Lasertechnik, mittels Heißluft oder mit anderen Techniken mit den Platten verschweißt wird.

Verschiedene Kantenleisten wurden entwickelt, um die Haftung der Kantenleiste auf der Platte zu steuern.

Die DE 20 2007 011 911 U1 beschreibt beispielsweise eine Kantenleiste umfassend eine Schmelzschicht, wobei die Schmelzschicht sowohl polare als auch unpolare Anteile im Molekülaufbau enthält. Ein wichtiger Werkstoff für die Schmelzschicht der DE 20 2007 011911 U1 ist dabei ein Pfropfcopolymer, insbesondere Maleinsäureanyhdridgepfropftes Polypropylen. Die Kantenleisten der DE 20 2007 011 911 U1 sind allerdings nachteilig, da die einzusetzenden Pfropfcopoylmere hohe Kosten verursachen und Eckverbindungen, an denen die Verschweißung Kante auf Kante erfolgt, oft schwächer sind. Darüber hinaus lassen sich solche Kanten nur mit erhöhtem Aufwand und/oder in einem kleinen Verarbeitungsfenster an Polypropylenplatten anbringen, die beispielsweise für Möbel für Outdoor-Küchen oder für Krankentransportmöbel eingesetzt werden.

Demgegenüber ist die Schmelzschicht der WO 2015/097163 A1 hauptsächlich aus einem leicht fließenden Polyolefin, wobei das leicht fließende Polyolefin nur aus unpolaren Monomeren aufgebaut ist. Die Kantenleisten der WO 2015/097163 A1 sind aber nicht für alle Untergründe gleich gut geeignet und zeigen nach dem Befestigen deutlich geringere Abzugskräfte von Spanplatten als von MDF-Platten. Ferner werden in der WO 2015/097163 A1 Polypropylenhomopolymere allein oder zusammen mit Polypropylencopolymeren eingesetzt. Polypropylenhomopolymere sind aber normalerweise spröde, was dazu führt, dass die resultierenden Kantenleisten mit Polypropylenhomopolymeren in der Schmelzschicht, wenn sie an die Platte angebracht werden, beim Anfahren häufig brechen und viel Ausschuss erzeugen. Die hohe Brüchigkeit bereitet auch schon bei der Herstellung der Kantenleisten, vor allem beim Aufrollen sowie beim Trennen der hergestellten Kantenleisten, Probleme. Außerdem erschwert es die Sprödigkeit, die Kantenleisten an runde Platten anzubringen. Die Verwendung von Polyproyplencopolymeren ist auf der anderen Seite kostenintensiv.

Die DE 10 2014 109 750 A1 beschreibt eine Kantenleiste für die Schmalflächen-Beschichtung von plattenförmigen Werkstücken mit einer Grundschicht und einer Schmelzschicht zum Befestigen der Kantenleiste an dem Werkstück. Die Schmelzschicht weist einen dielektrischen Verlustfaktor ε_{SS} für Mikrowellenstrahlung auf, welcher größer ist als der dielektrische Verlustfaktor ε_{GS} der Grundschicht.

Die DE 20 2014 106 173 U1 beschreibt eine Kantenleiste für Möbelstücke, umfassend eine Schmelzschicht und eine mit der Schmelzschicht verbundene Strukturschicht, die beide wenigstens teilweise einen polymeren Werkstoff aufweisen, wobei die Schmelzschicht Zusatzstoffe enthält. Die Schmelzschicht weist wenigstens einen eine Verfärbung verursachenden, wenigstens teilweise anorganische und/oder organische Pigmente enthaltenden Zusatzstoff in einer Menge von etwa 0,01 bis 10 Gew.-% bezogen auf ihr Gesamtgewicht auf.

Aufgabe der Erfindung war es, eine Kantenleiste bereitzustellen, die die Nachteile des Stands der Technik zumindest teilweise überwindet. Insbesondere sollen die Kantenleisten eine gute Verarbeitbarkeit sowie eine gute Festigkeit nach dem Anbringen an ein Werkstück aufweisen. Weitere Aufgaben, Merkmale und Vorteile der vorliegenden Erfindung werden aus der nachfolgenden Beschreibung deutlich.

### ZUSAMMENFASSUNG DER ERFINDUNG

Gelöst wird diese Aufgabe durch eine Kantenleiste, insbesondere für Möbelstücke, umfassend eine Strukturschicht und mindestens eine mit der Strukturschicht verbundene Funktionsschicht zum Befestigen der Kantenleiste an einer Schmalseite eines Werkstücks, insbesondere eines Möbelstücks, wobei die Funktionsschicht ein Polypropylenhomopolymer und ein Polyethylenhomopolymer enthält.

Gegenstand der Erfindung ist ferner ein Verfahren zur Herstellung einer Kantenleiste, insbesondere für Möbelstücke, umfassend eine Strukturschicht und mindestens eine mit der Strukturschicht verbundene Funktionsschicht zum Befestigen der Kantenleiste an einer Schmalseite eines Werkstücks, insbesondere eines Möbelstücks, wobei die Funktionsschicht ein Polypropylenhomopolymer und ein Polyethylenhomopolymer enthält, umfassend
a. Formen, insbesondere Extrudieren, der mindestens einen das Polypropylenhomopolymer und das Polyethylenhomopolymer enthaltenden Funktionsschicht,
b. Formen, insbesondere Extrudieren, der Strukturschicht, und
c. Verbinden der Funktionsschicht mit der Strukturschicht.

Gegenstand der Erfindung ist weiter ein Verfahren zum Befestigen einer erfindungsgemäßen Kantenleiste an die Schmalseite eines Werkstücks, insbesondere eines Möbelstücks, wobei die Funktionsschicht durch Einwirkung von mindestens einem von Laserstrahlung, Mikrowellenstrahlung, Ultraschall, Infrarotstrahlung, Plasma und Heißluft aktiviert wird.

Gegenstand der Erfindung ist auch die Verwendung einer wie hierin definierten Funktionsschicht als bandförmiger Schmelzkitt, insbesondere beim Befestigen einer Leiste oder eines Bandes an eine Schmalseite eines Werkstücks, insbesondere eines Möbelstücks.

Gegenstand der Erfindung ist außerdem ein Werkstück, insbesondere Möbelstück, umfassend eine erfindungsgemäße Kantenleiste.

Gegenstand der Erfindung ist schließlich ein bandförmiger Schmelzkitt zum Befestigen einer Leiste oder eines Bandes an einer Schmalseite eines Werkstücks, insbesondere eines Möbelstücks, wobei der Schmelzkitt ein Polypropylenhomopolymer und ein Polyethylenhomopolymer enthält.

Durch die Verwendung eines Polypropylenhomopolymers in Verbindung mit einem Polyethylenhomopolymer in der erfindungsgemäßen Funktionsschicht der Kantenleiste ist es auf einfache Weise möglich, die Funktionsschicht an den jeweiligen Verklebungsuntergrund, beispielsweise Spanplatten oder MDF-Platten, anzupassen. Dadurch kann eine gute Verklebung der Kantenleiste mit dem jeweiligen Untergrund hergestellt werden. Darüber hinaus weisen die erfindungsgemäßen Kantenleisten eine gute Flexibilität auf, so dass Ausschüsse in der Produktion beispielsweise der Kantenleisten aber auch von Möbelplatten, reduziert werden können. Ferner wurde gefunden, dass durch die Verwendung von Polypropylenhomopolymer und Polyethylenhomopolymer in der Funktionsschicht die sogenannte "offene Zeit", d.h. die Zeit zum Anbringen der Kantenleiste an das Werkstück nach Aktivieren der Funktionsschicht, verlängert werden kann, wodurch die Verarbeitung, insbesondere bei der Radienverklebung, vereinfacht werden kann. Außerdem wurde gefunden, dass Kantenleisten mit einer Funktionsschicht enthaltend Polypropylenhomopolymer und Polyethylenhomopolymer ein großes Verarbeitungsfenster beim Anbringen, insbesondere hinsichtlich des Energieeintrags, ermöglichen. Schließlich lassen sich Polypropylenhomopolymere und Polyethylenhomopolymere gut recyclen.

### BEVORZUGTE AUSFÜHRUNGSFORMEN DER ERFINDUNG

Ein Kitt, insbesondere ein Schmelzkitt, dient zur Verbindung von Werkstoffen. Ein Schmelzkitt ist bei Raumtemperatur fest, schmilzt beim Erwärmen ohne Substanzverlust und erstarrt beim Erkalten ohne wesentlichen Schwund. Ein Schmelzkitt wird erst durch Schmelzen plastisch und damit verarbeitbar.

Das Polypropylenhomopolymer kann verschiedene Schmelzflussindizes aufweisen. Über den Schmelzflussindex kann die Fließfähigkeit der Funktionsschicht gesteuert werden. Vorzugsweise weist das Polypropylenhomopolymer einen Schmelzflussindex von 100 g/ 10 min oder mehr, bevorzugt von 150 g/ 10 min oder mehr, weiter bevorzugt 200 g/ 10 min oder mehr, auf, gemessen bei 230°C mit einem Gewicht von 2,16 kg nach DIN EN ISO 1133-1, insbesondere DIN EN ISO 1133-1:2021-03. Es hat sich herausgestellt, dass bei tieferen Schmelzflussindizes die Kantenleiste eine niedrigere Abschälfestigkeit nach Anbringung an der Platte aufweist. Es wird vermutet, dass aufgrund eines tieferen Schmelzflussindex die Funktionsschicht nicht so effektiv in die Porenstruktur des Untergrunds eindringen kann, was zu niedrigeren Abschälfestigkeiten führen kann.

Das Polypropylenhomopolymer weist ferner vorzugsweise einen Schmelzflussindex von 1200 g/ 10 min oder weniger, bevorzugt von 900 g/ 10 min oder weniger, weiter bevorzugt von 700 g/ 10 min oder weniger, besonders bevorzugt von 500 g/ 10 min oder weniger auf, gemessen bei 230°C mit einem Gewicht von 2,16 kg nach DIN EN ISO 1133-1, insbesondere DIN EN ISO 1133-1:2021-03. Es hat sich herausgestellt, dass bei höheren Schmelzflussindizes die Funktionsschicht nach Aktivierung bzw. Aufwärmen zu flüssig für ein Aufbringen an eine Platte sein kann.

Geeignete Polyproyplenhomopolymere können beispielsweise von Idemitsu Chemicals, Borealis AG oder weiteren Herstellern von Polypropylenhomopolymeren bezogen werden.

Das Polyethylenhomopolymer kann verschiedene Schmelzflussindizes aufweisen. Vorzugsweise weist das Polyethylenhomopolymer einen Schmelzflussindex von 200 g/ 10 min oder weniger, bevorzugt von 150 g/ 10 min oder weniger, weiter bevorzugt von 130 g/ 10 min oder weniger, noch weiter bevorzugt von 100 g/10 min oder weniger, besonders bevorzugt von 70 g/ 10 min oder weniger, auf, gemessen bei 190°C mit einem Gewicht von 2,16 kg nach DIN EN ISO 1133-1, insbesondere DIN EN ISO 1133-1:2021-03. Mit einem Polyethylenhomopolymer mit einem Schmelzflussindex in den vorstehenden Bereichen kann die Funktionsschicht gut an die entsprechenden Untergründe angepasst werden.

Dem Fachmann sind verschiedene Arten von Polyethylenhomopolymeren bekannt. Dem Fachmann sind beispielsweise low density Polyethylenehomopolymere (PE-LD) und linear low density Polyethylenhomopolymere (PE-LLD) bekannt. Ferner sind dem Fachmann Metallocen-Polyethylenhomopolymere bekannt. Insbesondere PE-LLD können Metallocen-Polyethylenhomopolymere sein. Dementsprechend können für die Herstellung des Polyethylenhomopolymers in der mindestens einen Funktionsschicht auch die für die Herstellung von PE-LLD üblichen Monomere eingesetzt werden.

Verschiedene Polyethylenhomopolymere kommen für die erfindungsgemäße Funktionsschicht in Frage. Vorzugsweise ist das Polyethylenhomopolymer ein PE-LD, bevorzugt ein PE-LLD. Das Polyethylenhomopolymer weist ferner vorzugsweise eine Dichte von 0,900 g/cm³ bis 0,940 g/cm³, bevorzugt von 0,910 g/cm³ bis 0,936 g/cm³, auf. Gemäß einer Ausführungsform ist das Polyethylenhomopolymer ein Metallocen-Polyethylenhomopolymer.

Die Funktionsschicht kann auch weitere Polyethylenhomopolymere enthalten.

Geeignete Polyethylenhomopolymere können beispielsweise von LyondellBasell, Chevron Phillips Chemical Company LP oder weiteren Herstellern von Polyethylenhomopolymeren bezogen werden.

Mit den vorstehend genannten Polypropylenhomopolymeren und Polyethylenhomopolymeren kann die Stärke der Befestigung an dem Werkstück eingestellt und/oder verbessert werden.

Die Funktionsschicht kann unterschiedliche Dicken aufweisen. Vorteilhafterweise weist die Funktionsschicht eine Dicke von 0,05 mm bis 5 mm, vorzugsweise von 0,05 mm bis 2 mm, weiter bevorzugt von 0,05 mm bis 1 mm, besonders bevorzugt von 0,1 mm bis 0,25 mm, auf.

Die Kantenleiste weist zweckmäßigerweise eine Breite von 5 mm bis 120 mm, bevorzugt 5 bis 80 mm, weiter bevorzugt 5 bis 40 mm, noch weiter bevorzugt 5 bis 30 mm, besonders bevorzugt 18 bis 28 mm auf.

Das Polypropylenhomopolymer kann in unterschiedlichen Mengen in der Funktionsschicht vorhanden sein. Vorzugsweise enthält die Funktionsschicht 40 Gew.-% bis 99 Gew.-%, bevorzugt 55 Gew.-% bis 95 Gew.-%, weiter bevorzugt 70 Gew.-% bis 95 Gew.-%, besonders bevorzugt 80 Gew.-% bis 95 Gew.-% des Polypropylenhomopolymers, bezogen auf die Gesamtmasse der Funktionsschicht.

Die Funktionsschicht kann ferner unterschiedliche Mengen an Polyethylenhomopolymer enthalten. Vorzugsweise enthält die Funktionsschicht 0,1 Gew.-% bis 40 Gew.-%, bevorzugt 0,1 Gew.-% bis 30 Gew.-%, weiter bevorzugt 0,1 bis 25 Gew.-%, noch weiter bevorzugt 1 Gew.-% bis 20 Gew.-%, besonders bevorzugt 1 Gew.-% bis 10 Gew.-%, des Polyethylenhomopolymers, bezogen auf die Gesamtmasse der Funktionsschicht.

Die Funktionsschicht kann gemäß einer Ausführungsform mindestens einen Füllstoff enthalten. Die Funktionsschicht kann Füllstoffe auf Naturfaserbasis oder mineralische Füllstoffe enthalten. Beispiele für Füllstoffe auf Naturfaserbasis sind Holzfasern, Hanffasern, Bambusfasern, Sisalfasern, Reishülsen oder Kokosfasern. Beispiele für mineralische Füllstoffe sind Talkum, Bariumsulfat, Calciumcarbonat, Dolomit, Siliciumdioxid, Glimmer, Kaolin, Diatomeenerde, Glass, Wollastonit, Calciumsulfat, Halloysit oder Zinkoxid.

Vorzugsweise enthält die Funktionsschicht mindestens einen Füllstoff, ausgewählt aus der Gruppe bestehend aus Füllstoffen auf Naturfaserbasis, insbesondere Holzfasern, Hanffasern, Bambusfasern, Sisalfasern, Reishülsen oder Kokosfasern, mineralischen Füllstoffen, insbesondere Talkum, Bariumsulfat, Calciumcarbonat, Dolomit, Siliciumdioxid, Glimmer, Kaolin, Diatomeenerde, Glass, Wollastonit, Calciumsulfat, Halloysit oder Zinkoxid, und Mischungen davon.

Es wurde gefunden, dass durch die Zugabe von Füllstoffen in die Funktionsschicht die Härte der Funktionsschicht erhöht werden kann. Eine Erhöhung der Härte führt zu einem verbesserten Fräsverhalten beim Abfräsen von Überständen der Kantenleiste nach dem Anbringen der Kantenleiste an ein Werkstück. Der Eintrag von Schmutz in eine Funktionsschicht im späteren Gebrauch kann durch eine Erhöhung der Härte ebenfalls reduziert werden. Zudem kann durch die Zugabe von Füllstoffen das Fließverhalten der Funktionsschicht beeinflusst werden. Schließlich wurde gefunden, dass Füllstoffe in der Funktionsschicht eine schnellere Produktion der Kantenleiste und ein schnelleres Anbringen der Kantenleiste an ein Werkstück erlauben. Ohne an eine wissenschaftliche Theorie gebunden sein zu wollen scheint dies von einer nukleierenden Wirkung der Füllstoffe hervorgerufen zu werden, die ein schnelleres Aushärten der Funktionsschicht bewirkt.

Die Funktionsschicht kann Füllstoffe in unterschiedlichen Mengen enthalten. Vorzugsweise enthält die Funktionsschicht mindestens einen Füllstoff in einer Menge von 1 Gew.-% bis 40 Gew.-%, bevorzugt 1 Gew.-% bis 35 Gew.-%, weiter bevorzugt 1 Gew.-% bis 25 Gew.-%, besonders bevorzugt 1 Gew.-% bis 10 Gew.-%, bezogen auf die Gesamtmasse der Funktionsschicht.

Gemäß einer Ausführungsform enthält die Kantenleiste 1 Gew.-% bis 40 Gew.-%, bevorzugt 1 Gew.-% bis 35 Gew.-%, weiter bevorzugt 1 Gew.-% bis 25 Gew.-%, besonders bevorzugt 1 Gew.-% bis 10 Gew.-%, mindestens eines Füllstoffs ausgewählt aus der Gruppe bestehend aus Füllstoffen auf Naturfaserbasis, insbesondere Holzfasern, Hanffasern, Bambusfasern, Sisalfasern, Reishülsen oder Kokosfasern, mineralischen Füllstoffen, insbesondere Talkum, Bariumsulfat, Calciumcarbonat, Dolomit, Siliciumdioxid, Glimmer, Kaolin, Diatomeenerde, Glass, Wollastonit, Calciumsulfat, Halloysit oder Zinkoxid, und Mischungen davon.

Ferner kann die Funktionsschicht ein oder mehrere Additive enthalten. Mit Additiven können Eigenschaften der Funktionsschicht und damit der Kantenleiste gezielt beeinflusst werden. Die Funktionsschicht kann insbesondere ein Additiv ausgewählt aus der Gruppe bestehend aus Antioxidantien, UV Absorbern, hindered amine light stabilizers (HALS), Pigmente, Farbstoffe, Gleitschutzmittel, Antiblockmittel, Lichtstabilisatoren und Mischungen davon, enthalten.

Antioxidantien können beispielsweise von MPI Chemie, BASF SE, Clariant AG oder anderen Herstellern für Kunststoffadditive bezogen werden. Antioxidantien können die Wärmestabilität der Funktionsschicht erhöhen.

UV Absorber können beispielsweise von MPI Chemie, BASF SE, Solvay SA oder anderen Herstellern von UV Absorbern bezogen werden. UV Absorber helfen, die UV Stabilität der Funktionsschicht zu erhöhen.

Pigmente und Farbstoffe können beispielsweise von BASF SE, Altana AG, Merck KGaA, Clariant AG oder anderen Herstellern von Pigmenten und Farbstoffen bezogen werden. Die Pigmente und Farbstoffe können in unterschiedlichen Formen vorliegen.

Vorzugsweise können die Pigmente und/oder Farbstoffe, in dem Polyproyplenhomopolymer und/oder im Polyethylenhomopolymer gelöst oder dispergiert werden. Bevorzugt sind die Pigmente und/oder Farbstoffe im Polyproypelnhomopolymer und/oder im Polyethylenhomopolymer gelöst oder dispergiert.

Gleitschutzmittel können beispielsweise von Kafrit Industries Ltd, A. Schulman Inc., Ampacet Corporation oder anderen Herstellern von Gleitschutzmitteln bezogen werden. Gleitschutzmittel können helfen, die Produktionsgeschwindigkeit zu steigern.

Antiblockmittel können beispielsweise von Kafrit Industries Ltd, Ampacet Corporation, Croda International plc oder anderen Herstellern von Antiblockmitteln bezogen werden. Antiblockmittel können dabei helfen, ein unerwünschtes Verkleben der Kantenleiste, insbesondere einer aufgerollten Kantenleiste, zu verhindern.

Hindered amine light stabilizers (HALS) können beispielsweise von BASF SE, Clariant AG, Azelis SA oder anderen Herstellern von HALS bezogen werden. HALS können die Lichtstabilität der Funktionsschicht verbessern. Dies kann auch eine Alterung und insbesondere eine Versprödung der Funktionsschicht im verarbeiteten Zustand verlangsamen bzw. reduzieren.

Die Funktionsschicht kann die Additive in verschiedenen Mengen enthalten. Vorteilhafterweise beträgt die Gesamtmenge an Additiven in der Funktionsschicht 0,1 Gew.-% bis 15 Gew.-%, bevorzugt 0,1 Gew.-% bis 10 Gew.-%, bezogen auf die Gesamtmasse der Funktionsschicht. Die Additive können individuell insbesondere jeweils in einer Menge von 0,1 Gew.-% bis 5 Gew.-%, bevorzugt 0,1 Gew.-% bis 3 Gew.-%, in der Funktionsschicht enthalten sein, bezogen auf die Gesamtmasse der Funktionsschicht. Additive, die keine Pigmente oder Farbstoffe sind, können besonders bevorzugt in einer Menge von 0,1 Gew.-% bis 1 Gew.-% in der Funktionsschicht enthalten sein, bezogen auf die Gesamtmasse der Funktionsschicht.

Vorteilhafterweise enthält die Funktionsschicht Energie-absorbierende Zusatzstoffe. Energie-absorbierende Zusatzstoffe können die Funktionsschicht aktivieren, wodurch das Befestigen der Kantenleiste an einem Werkstück, insbesondere einem Möbelstück, verbessert wird.

Abhängig von der Art der Energie, die beim Befestigen der Kantenleiste an einem Werkstück eingesetzt wird, können unterschiedliche Energie-absorbierende Zusatzstoffe verwendet werden. Beispiele für Energie-absorbierende Zusatzstoffe sind Wärme-absorbierende Zusatzstoffe, Strahlung-absorbierende Zusatzstoffe wie Mikrowellenstrahlung absorbierende Zusatzstoffe, und Licht-absorbierende Zusatzstoffe. Vorzugsweise enthält die Funktionsschicht Licht- und/oder Strahlung-absorbierende Zusatzstoffe. Weiter bevorzugt enthält die Funktionsschicht Laser-absorbierende Zusatzstoffe. Laser-absorbierende Zusatzstoffe sind insbesondere nützlich, wenn die Kantenleiste mit Laseraktivierung befestigt wird.

Energie-absorbierende Zusatzstoffe sind vorteilhafterweise in der Kantenleiste in einer Menge von 0,1 Gew.-% bis 5 Gew.-%, bevorzugt 0,1 Gew.-% bis 3 Gew.-%, weiter bevorzugt 0,1 Gew.-% bis 1 Gew.-%, enthalten, bezogen auf die Gesamtmasse der Funktionsschicht.

Das Polypropylenhomopolymer, das Polyethylenhomopolymer, der Füllstoff, die Additive und die Energie-absorbierenden Zusatzstoffe können als Bestandteile der Funktionsschicht bezeichnet werden. Vorzugsweise addieren alle Bestandteile der Funktionsschicht auf 100 Gew.-% auf, bezogen auf das Gesamtgewicht der Funktionsschicht.

Die Kantenleiste umfasst mindestens eine Funktionsschicht. Die Kantenleiste kann auch zwei oder mehr Funktionsschichten umfassen. Wenn die Kantenleiste zwei oder mehr Funktionsschichten umfasst, können die Funktionsschichten gleich oder verschieden sein. Zwei oder mehr Funktionsschichten können auf unterschiedliche Art und Weise angeordnet sein. Beispielsweise können zwei Funktionsschichten übereinander angeordnet sein, so dass nur eine der Funktionsschichten in direkten Kontakt mit dem Werkstück kommt. Auf diese Weise kann die eine Funktionsschicht für die Adhäsion der Kantenleiste an das Werkstück optimiert werden, während die weitere Funktionsschicht andere Zwecke erfüllen kann. Zwei Funktionsschichten können auch nebeneinander angeordnet werden. Das kann beispielsweise vorteilhaft sein, um die Kantenleiste an inhomogene Werkstücke anzupassen. Drei oder mehr Funktionsschichten können übereinander, nebeneinander oder Kombinationen davon angeordnet werden. Drei Funktionsschichten nebeneinander können beispielsweise für Leichtbauplatten oder Wabenplatten vorteilhaft sein. Wenn drei Funktionsschichten nebeneinander verwendet werden, können diese auch unterschiedliche Dicken aufweisen. Beispielsweise kann die mittlere Funktionsschicht dicker sein als die äußeren Funktionsschichten. Die äußeren Funktionsschichten können auch dicker sein als die mittlere Funktionsschicht.

Die Kantenleiste kann auch genau eine Funktionsschicht umfassen.

Die Strukturschicht der Kantenleiste, mit der die Funktionsschicht verbunden ist, kann die mechanische Stabilität der Kantenleiste verbessern. Die Strukturschicht kann der Kantenleiste auch einen dekorativen Effekt verleihen.

Die Strukturschicht kann direkt mit der Funktionsschicht verbunden sein. Die Kantenleiste kann dann beispielsweise mittels Coextrusion hergestellt werden. Vorzugsweise ist die Funktionsschicht mit der Strukturschicht durch Coextrusion verbunden. Diese Art der Verbindung ist insbesondere für die Herstellung in hohen Stückzahlen vorteilhaft.

Die Funktionsschicht kann auch in einem zusätzlichen Schritt auf die Strukturschicht nach deren Herstellung aufgebracht sein. Das erlaubt, den Herstellungsprozess flexibel zu gestalten. Die Funktionsschicht kann mit der Strukturschicht durch Poscoating, Postcoextrusion, Laminieren oder Heißbeschichten verbunden sein.

Die Strukturschicht kann auch indirekt mit der Funktionsschicht verbunden sein. Beispielsweise kann eine Klebeschicht oder eine Haftvermittlerschicht zwischen der Strukturschicht und der Funktionsschicht sein. Vorzugsweise ist zwischen der Funktionsschicht und der Strukturschicht eine Haftvermittlerschicht angeordnet.

Die Strukturschicht kann aus verschiedenen Werkstoffen hergestellt sein. Vorzugsweise ist die Strukturschicht aus einem Werkstoff hergestellt, der Papier, Pappe, Furnier, continuous pressure laminate (CPL), oder ein thermoplastisches Material enthält. Continuous pressure laminate werden manchmal auch als Melaminkanten bezeichnet und können beispielsweise im Fachhandel bezogen werden.

Die Strukturschicht ist weiter bevorzugt aus einem Werkstoff hergestellt, der ein thermoplastisches Material, insbesondere ein thermoplastisches Polymer, enthält. Das thermoplastische Polymer kann ein thermoplastisches Polymer aus fossilen Rohstoffen oder aus biobasierten Substanzen oder ein thermoplastisches Material aus fossilen Rohstoffen und biobasierten Substanzen sein, wie ein thermoplastisches Copolymer oder ein Verbundmaterial. Vorzugsweise kann das thermoplastische Material extrudiert werden. Vorteilhafterweise weist das thermoplastische Material einen Schmelzpunkt unter 400°C auf. Das thermoplastische Polymer ist vorzugsweise ausgewählt aus der Gruppe bestehend aus Wood-Plastic-Composite, Polyethylen, Polyethylen aus biobasierten Substanzen, Polypropylen, Polypropylen aus biobasierten Substanzen, Polymilchsäure, Stärke, thermoplastische Stärke, Acrylnitril-butadien-Styrol-Copolymer, Acrylnitril-Styrol-Acrylat-Copolymer, Polyvinylchlorid, Polymethylmethacrylat, Polyethylentherephthalat, Olefin-basiertem thermoplastischem Elastomer, thermoplastischem Polyurethan, thermoplastischem Copolyester, Styrolblockcopolymere wie Styrol-Butadien-Styrol Copolymer, Styrol-Ethylen-Butylen-Styrol Copolymer, Styrol-Ethylen-Propylen-Styrol Copolymer, Styrol-Ethylen-Ethylen-Propylen-Styrol Copolymer, Poly(methylmethacrylat-co-Butadien-co-Styrol), thermoplastisches Copolyamid und Mischungen davon. Die vorgenannten Materialien werden üblicherweise in der Herstellung von Kantenleisten eingesetzt und sind kommerziell erhältlich. Polymere aus biobasierten Ressourcen oder Substanzen sind beispielsweise Polymere aus nachwachsenden Rohstoffen, wie Polyethylen, das aus Zuckerrohr-basiertem Ethanol hergestellt wurde.

Das erfindungsgemäße Verfahren zur Herstellung einer Kantenleiste, insbesondere für Möbelstücke, umfassend eine Strukturschicht und mindestens eine mit der Strukturschicht verbundene Funktionsschicht zum Befestigen der Kantenleiste an einer Schmalseite eines Werkstücks, insbesondere eines Möbelstücks, wobei die Funktionsschicht ein Polypropylenhomopolymer und ein Polyethylenhomopolymer enthält, umfasst
a. Formen, insbesondere Extrudieren, der mindestens einen das Polypropylenhomopolymer und das Polyethylenhomopolymer enthaltenden Funktionsschicht,
b. Formen, insbesondere Extrudieren, der Strukturschicht, und
c. Verbinden der Funktionsschicht mit der Strukturschicht.

Das Polypropylenhomopolymer und das Polyethylenhomopolymer können zusammen in einem Masterbatch vorhanden sein, oder sie können separat dem Extruder zugeführt werden.

Das vorstehend zur Funktionsschicht der erfindungsgemäßen Kantenleiste, insbesondere zum Polypropylenhomopolymer, zum Polyethylenhomopolymer, zur Dicke, zum Füllstoff, zu den Additiven und zu den Energie absorbierenden Zusatzstoffen, Gesagte gilt vorzugsweise für die Funktionsschicht des erfindungsgemäßen Herstellungsverfahrens entsprechend. Das vorstehend zur Strukturschicht der erfindungsgemäßen Kantenleiste, insbesondere zum Werkstoff, Gesagte gilt vorzugsweise für die Strukturschicht des erfindungsgemäßen Herstellungsverfahrens entsprechend.

Mit dem erfindungsgemäßen Verfahren kann insbesondere eine erfindungsgemäße Kantenleiste hergestellt werden.

Im erfindungsgemäßen Herstellungsverfahren wird die Funktionsschicht zweckmäßigerweise mit der Strukturschicht coextrudiert. Dadurch kann eine direkte Verbindung der Funktionsschicht mit der Strukturschicht erreicht werden. Alternativ kann im erfindungsgemäßen Herstellungsverfahren die Funktionsschicht auch auf eine Strukturschicht, insbesondere eine vorgefertigte Strukturschicht, aufgebracht werden. Insbesondere kann die Funktionsschicht mit der Strukturschicht durch Postcoating, Postcoextrusion, Laminieren oder Heißbeschichten verbunden werden.

Gemäß einer Ausführungsform wird die Funktionsschicht mit einer vorgefertigten Strukturschicht durch Postcoating, Postcoextrusion, Laminieren oder Heißbeschichten verbunden, insbesondere in einem weiteren Schritt nach Herstellung der Strukturschicht. Auf die Strukturschicht kann in dieser Ausführungsform eine Haftvermittlerschicht aufgebracht werden, und die Funktionsschicht wird danach auf die Haftvermittlerschicht auf der Strukturschicht aufgebracht, insbesondere durch Postcoating. Ebenso kann in dieser Ausführungsform eine Haftvermittlerschicht auf die Funktionsschicht aufgebracht werden, und die Strukturschicht wird danach auf die Haftvermittlerschicht auf der Funktionsschicht aufgebracht, insbesondere durch Postcoating.

Gemäß einer weiteren Ausführungsform werden die Strukturschicht und die Funktionsschicht vorgefertigt. Die vorgefertigte Strukturschicht und die vorgefertigte Funktionsschicht können in dieser Ausführungsform durch Laminieren miteinander verbunden werden. Auf die Strukturschicht und/oder auf die Funktionsschicht kann in dieser Ausführungsform eine Haftvermittlerschicht aufgebracht werden.

Die Haftvermittlerschicht kann auf die Strukturschicht und/oder auf die Funktionsschicht insbesondere durch Coextrusion, Extrusion, vorzugsweise Postcoextrusion, oder durch Aufbringen einer haftvermittlerhaltigen Flüssigkeit aufgebracht werden.

Bei der Herstellung der Kantenleiste ist es möglich, mehrere Kantenleisten gleichzeitig herzustellen. In diesem Fall wird zunächst ein Band mit einer Breite von 10 mm bis 800 mm, bevorzugt 10 mm bis 500 mm, besonders bevorzugt 20 mm bis 420 mm, in einem ersten Schritt hergestellt, das anschließend in Kantenleisten mit den vorgenannten Breiten geschnitten wird.

Im erfindungsgemäßen Verfahren zum Befestigen einer erfindungsgemäßen Kantenleiste an der Schmalseite eines Werkstücks, insbesondere eines Möbelstücks, wird die Funktionsschicht durch Einwirkung von mindestens einem von Laserstrahlung, Mikrowellenstrahlung, Ultraschall, Infrarotstrahlung, Plasma und Heißluft aktiviert.

Wenn Laserstrahlung zum Aktivieren der Funktionsschicht verwendet wird, kann die Energiedichte der Laserstrahlung von 5 J/cm² bis 50 J/cm², vorzugsweise von 10 J/cm² bis 30 J/cm², bevorzugt von 15 J/cm² bis 25 J/cm² betragen. Die Laserleistung kann insbesondere von der Farbe der Funktionsschicht abhängen. Für Funktionsschichten mit einer dunklen Farbe wird eine geringere Laserleistung benötigt.

Wenn die Funktionsschicht mit Heißluft aktiviert wird, wird die Heißluft vorzugsweise bei einer Temperatur von 300°C bis 650°C bereitgestellt. Vorzugsweise wird die Heißluft bei einem Druck von 2 bar bis 6 bar bereitgestellt.

Wenn eine Maschine zum Befestigen der Kantenleiste an der Schmalseite eines Werkstücks eingesetzt wird, verwendet die Maschine vorzugsweise eine Vorschubgeschwindigkeit von 3 m/min bis 80 m/min, insbesondere von 3 m/min bis 30 m/min, dabei insbesondere von 10 m/min bis 20 m/min, arbeiten.

Bei der erfindungsgemäßen Verwendung wird eine wie vorstehend beschriebene Funktionsschicht als bandförmiger Schmelzkitt verwendet, vorzugsweise beim Befestigen einer Leiste oder eines Bandes an eine Schmalseite eines Werkstücks. Das Werkstück kann insbesondere ein Möbelstück oder eine Möbelplatte sein.

Die Leiste, die vorzugsweise in der erfindungsgemäßen Verwendung an einer Schmalseite eines Werkstücks befestigt wird, ist vorzugsweise eine Leiste aus einem wie vorstehend für die Strukturschicht beschriebenen Werkstoff. Das Band, das vorzugsweise in der erfindungsgemäßen Verwendung an einer Schmalseite eines Werkstücks befestigt wird, ist vorzugsweise ein Band aus einem wie vorstehend für die Strukturschicht beschriebenen Werkstoff. Das vorstehend zur Strukturschicht Gesagte trifft vorzugsweise entsprechend für die Leiste und/oder das Band der erfindungsgemäßen Verwendung zu.

Bei der erfindungsgemäßen Verwendung wird die Funktionsschicht ähnlich wie ein doppelseitiges Klebeband, das zum Entfalten der Klebewirkung aktiviert wird, verwendet. Bei der erfindungsgemäßen Verwendung kann der bandförmige Schmelzkitt aus einer oder mehreren vorstehend beschriebenen Funktionsschichten bestehen, beispielsweise zwei, drei oder vier Funktionsschichten. Vorzugsweise besteht der bandförmige Schmelzkitt aus genau einer wie vorstehend beschriebenen Funktionsschicht. Das vorstehend zur Funktionsschicht für die erfindungsgemäßen Kantenleiste insbesondere zum Polypropylenhomopolymer, zum Polyethylenhomopolymer, zur Dicke, zum Füllstoff, zu den Additiven und zu den Energie absorbierenden Zusatzstoffen, Gesagte gilt vorzugsweise für den bandförmigen Schmelzkitt der Verwendung entsprechend.

Das erfindungsgemäße Werkstück, insbesondere Möbelstück, umfasst eine erfindungsgemäße Kantenleiste. Die Kantenleiste kann in einem erfindungsgemäßen Verfahren zum Befestigen einer erfindungsgemäßen Kantenleiste an der Schmalseite eines Werkstücks an das Werkstück angebracht worden sein.

Weiterer Gegenstand der Erfindung ist ein bandförmiger Schmelzkitt zum Befestigen einer Leiste oder eines Bandes an einer Schmalseite eines Werkstücks, insbesondere eines Möbelstücks, wobei der Schmelzkitt ein Polypropylenhomopolymer und ein Polyethylenhomopolymer enthält.

Das vorstehend bei der erfindungsgemäßen Verwendung zur Leiste und zum Band Gesagte gilt vorzugsweise für die Leiste und das Band des erfindungsgemäßen bandförmigen Schmelzkitts entsprechend. Für den erfindungsgemäßen bandförmigen Schmelzkitt gilt vorzugsweise das Vorstehend zur Funktionsschicht der erfindungsgemäßen Kantenleiste insbesondere zum Polypropylenhomopolymer, zum Polyethylenhomopolymer, zur Dicke, zum Füllstoff, zu den Additiven und zu den Energie absorbierenden Zusatzstoffen, Gesagte entsprechend.

### BEISPIELE

### Materialien

- PPH:: Polypropylenhomopolymer mit einer Schmelztemperatur (DSC) von 158°C nach ISO 11357-3 und einem Schmelzflussindex nach ISO 1133-1 von 1200 g/ 10 min bei 230 °C mit einem Gewicht von 2,16 kg.
- PE1:: Low density Polyethylen (LDPE) mit einer Schmelztemperatur von 180 bis 230°C, einer Dichte von 0,918 g/cm³ nach ISO 1183-1, einer Shore D Härte von 45 nach ISO 868 und einem Schmelzflussindex nach ISO 1133-1 von 65 g/ 10 min bei 190°C mit einem Gewicht von 2,16 kg.
- PE2:: Metallocen linear low density Polyethylen (m-LLDPE) mit einer Dichte von 0,918 g/cm³ nach ASTM D1505 und einem Schmelzflussindex nach ASTM D1238 von 1 g/ 10 min bei 190°C mit einem Gewicht von 2,16 kg.
- FS: Farbstoff schwarz.

### Methoden:

Kantenleisten mit einer schwarz gefärbten Funktionsschicht und einer Strukturschicht mit einer Breite von 23 mm wurden durch Coextrusion hergestellt. Die Strukturschicht mit einer Dicke von 2 mm wurde aus Acrylnitril-Butadien-Styrol hergestellt. Die Funktionsschicht wies eine Dicke von 0,2 mm auf. Die Zusammensetzung der verschiedenen Funktionsschichten ist in der nachstehenden Tabelle 1 aufgeführt.

**Tabelle 1: Hergestellte Kantenleiste mit einer Strukturschicht aus Acrylnitril-Butadien-Styrol. Die Mengen der Inhaltsstoffe der Funktionsschicht sind jeweils in Gew.-%**

| IHS^{a} | Menge des Inhaltsstoffs in der Funktionsschicht der Kantenleiste Nr. | | | | | |
|---|---|---|---|---|---|---|
| | 1^{b} | 2 | 3 | 4 | 5 | 6 |
| PPH | 99 | 94,5 | 84,5 | 79,5 | 89,5 | 79,5 |
| PE1 | 0 | 4,5 | 14,5 | 19,5 | 0 | 0 |
| PE2 | 0 | 0 | 0 | 0 | 9,5 | 19,5 |
| FS | 1 | 1 | 1 | 1 | 1 | 1 |

| | | | | | | |
|---|---|---|---|---|---|---|
| Erläuterungen zu Tabelle 1: ^{a} IHS - Inhaltsstoff; ^{b} Vergleichsbeispiel. | | | | | | |

Die Kantenleisten 1 bis 6 wurden an MDF-Platten und an Spanplatten mit einer Dicke von 18 mm mittels Laseraktivierung befestigt. Die Kantenleisten wurden mit einem Maschinendruck von 2 bar bei einer Vorschubgeschwindigkeit von 18 m/min pneumatisch mit der aktivierten Funktionsschicht an die Schmalseite der MDF- bzw. der Spanplatten gepresst. Die Laseraktivierung wurde mit den wie in den Tabellen 2 und 3 angegebenen Energiedichten vorgenommen. Eine Homag PROFI KAL330/9/A3/L (2013) wurde für das Anbringen der Kantenleiste an die Platten verwendet.

Die durchschnittlichen Abschälfestigkeiten der Kantenleisten 1 bis 6 sind in den Tabellen 2 und 3 unten zusammengestellt.

Bei allen an die Platten montierten Kantenleisten stand die Kantenleiste über die Schmalseite über. Der Überstand wurde durch spanabhebende Bearbeitung entfernt, so dass die Platten stufenlos mit den Kantenleiste in Verbindung waren.

**Tabelle 2: Abschälfestigkeit in N/mm der an Spanplatten angebrachten Kantenleisten bei Aktivierung der Funktionsschicht mit unterschiedlichen Energiedichten.**

| Energiedichte [J/cm²]^{c} | Abschälfestigkeit Spanplatten [N/mm]^{a} für Kantenleiste Nr. in Abhängigkeit der Energiedichte | | | | | |
|---|---|---|---|---|---|---|
| | 1^{d} | 2 | 3 | 4 | 5 | 6 |
| 14 | nb^{b} | 1,8 | nb^{b} | nb^{b} | nb^{b} | 1,5 |
| 16 | nb^{b} | 2,7 | 2,2 | 2,3 | 2,3 | 2,2 |
| 18 | nb^{b} | 3,0 | 2,6 | 2,1 | 3,1 | 2,4 |
| 20 | nb^{b} | 3,3 | 2,5 | 2,1 | 2,6 | 2,9 |
| 22 | 2,5 | 3,1 | 2,6 | 2,3 | 2,9 | 2,7 |
| 24 | 2,6 | 2,9 | 2,8 | 2,2 | 2,5 | 2,4 |
| 26 | 2,9 | 3,1 | 2,5 | 2,1 | 3,1 | 2,9 |
| 28 | nb^{b} | 2,8 | 2,7 | 1,9 | 2,4 | 2,4 |

| | | | | | | |
|---|---|---|---|---|---|---|
| Erläuterungen zu Tabelle 2: ^{a} - Abschälfestigkeit bestimmt nach DIN EN 1464:2010-06; ^{b} nb - nicht bestimmt; ^{c} bei der Aktivierung der Kantenleiste verwendete Energiedichte; ^{d} Vergleichsbeispiel. | | | | | | |

**Tabelle 3: Abschälfestigkeit in N/mm der an MDF-Platten angebrachten Kantenleisten bei Aktivierung der Funktionsschicht mit unterschiedlichen Energiedichten.**

| Energiedichte [J/cm²]^{c} | Abschälfestigkeit MDF-Platten [N/mm]^{a} für Kantenleiste Nr. | | | | | |
|---|---|---|---|---|---|---|
| | 1^{d} | 2 | 3 | 4 | 5 | 6 |
| 14 | nb^{b} | 4,7 | nb^{b} | nb^{b} | 3,2 | 4,2 |
| 16 | 2,8 | 5,1 | 5,9 | 5,3 | 5,3 | 5,9 |
| 18 | 3,6 | 5,9 | 5,0 | 3,7 | 5,8 | 5,3 |
| 20 | nb^{b} | 5,2 | 3,3 | 3,8 | 5,2 | 3,6 |
| 22 | nb^{b} | 4,6 | 2,9 | 4,0 | 4,4 | 3,3 |
| 24 | nb^{b} | 4,3 | 2,8 | 3,3 | 4,3 | 3,7 |
| 26 | nb^{b} | 6,8 | 3,3 | 4,9 | 4,3 | 2,2 |
| 28 | nb^{b} | 5,7 | 4,8 | 6,3 | 3,3 | 1,7 |

| | | | | | | |
|---|---|---|---|---|---|---|
| Erläuterungen zu Tabelle 3: ^{a} - Abschälfestigkeit bestimmt nach DIN EN 1464:2010-06; ^{b} nb - nicht bestimmt; ^{c} bei der Aktivierung der Kantenleiste verwendete Energiedichte; ^{d} Vergleichsbeispiel. | | | | | | |

Aus den Tabellen 2 und 3 ist ersichtlich, dass eine Kantenleiste mit Funktionsschicht enthaltend Polypropylenhomopolymer und Polyethylenhomopolymer auf Spanplatten mindestens vergleichbare oder sogar höhere Abschälfestigkeiten und gleichzeitig auf MDF-Platten höhere Abschälfestigkeiten aufweist als eine Kantenleiste mit Funktionsschicht nur enthaltend Polypropylenhomopolymer. Zudem fällt an den Tabellen 2 und 3 auf, dass für die Kantenleisten 2 bis 6 hohe Abschälfestigkeiten über viele verschiedenen Energiedichten zum Aktivieren der Funktionsschicht erhalten wurden. Die Kantenleisten 2 bis 6 weisen daher große Verarbeitungsfenster beim Anbringen der Kantenleisten an ein Möbelstück auf.

## Patentansprüche

1. Kantenleiste, insbesondere für Möbelstücke, umfassend eine Strukturschicht und mindestens eine mit der Strukturschicht verbundene Funktionsschicht zum Befestigen der Kantenleiste an einer Schmalseite eines Werkstücks, insbesondere eines Möbelstücks, **dadurch gekennzeichnet, dass** die Funktionsschicht ein Polypropylenhomopolymer und ein Polyethylenhomopolymer enthält.

2. Kantenleiste nach Anspruch 1, **dadurch gekennzeichnet, dass** das Polypropylenhomopolymer einen Schmelzflussindex von 100 g/ 10 min oder mehr, bevorzugt von 150 g/ 10 min oder mehr, weiter bevorzugt von 200 g/ 10 min oder mehr, aufweist, gemessen bei 230°C mit einem Gewicht von 2,16 kg nach DIN EN ISO 1133-1, insbesondere DIN EN ISO 1133-1:2021-03.

3. Kantenleiste nach einem der vorstehenden Ansprüche, **dadurch gekennzeichnet, dass** das Polypropylenhomopolymer einen Schmelzflussindex von 1200 g/ 10 min oder weniger, bevorzugt von 900 g/ 10 min oder weniger, weiter bevorzugt von 700 g/ 10 min oder weniger, besonders bevorzugt von 500 g/ 10 min oder weniger aufweist, gemessen bei 230°C mit einem Gewicht von 2,16 kg nach DIN EN ISO 1133-1.

4. Kantenleiste nach einem der vorstehenden Ansprüche, **dadurch gekennzeichnet, dass** das Polyethylenhomopolymer einen Schmelzflussindex von 200 g/ 10 min oder weniger, bevorzugt von 150 g/ 10 min oder weniger, weiter bevorzugt von 130 g/ 10 min oder weniger, noch weiter bevorzugt von 100 g/10 min oder weniger, besonders bevorzugt von 70 g/ 10 min oder weniger, aufweist, gemessen bei 190°C mit einem Gewicht von 2,16 kg nach DIN EN ISO 1133-1, insbesondere DIN EN ISO 1133-1:2021-03.

5. Kantenleiste nach einem der vorstehenden Ansprüche, **dadurch gekennzeichnet, dass** das Polyethylenhomopolymer ein PE-LD, bevorzugt ein PE-LLD, ist, und/oder eine Dichte von 0,900 g/cm³ bis 0,940 g/cm³, bevorzugt von 0,910 g/cm³ bis 0,936 g/cm³, aufweist, und/oder ein Metallocen-Polyethylenhomopolymer ist.

6. Kantenleiste nach einem der vorstehenden Ansprüche, **dadurch gekennzeichnet, dass** die Funktionsschicht eine Dicke von 0,05 mm bis 5 mm, vorzugsweise von 0,05 mm bis 2 mm, weiter bevorzugt von 0,05 mm bis 1 mm, besonders bevorzugt von 0,1 mm bis 0,25 mm, aufweist.

7. Kantenleiste nach einem der vorstehenden Ansprüche, **dadurch gekennzeichnet, dass** die Funktionsschicht 40 Gew.-% bis 99 Gew.-%, bevorzugt 55 Gew.-% bis 95 Gew.-%, weiter bevorzugt 70 Gew.-% bis 95 Gew.-%, besonders bevorzugt 80 Gew.-% bis 95 Gew.-% des Polypropylenhomopolymers enthält, bezogen auf die Gesamtmasse der Funktionsschicht.

8. Kantenleiste nach einem der vorstehenden Ansprüche, **dadurch gekennzeichnet, dass** die Funktionsschicht 0,1 Gew.-% bis 40 Gew.-%, bevorzugt 0,1 Gew.-% bis 30 Gew.-%, weiter bevorzugt 0,1 bis 25 Gew.-%, noch weiter bevorzugt 1 Gew.-% bis 20 Gew.-%, besonders bevorzugt 1 Gew.-% bis 10 Gew.-%, des Polyethylenhomopolymers enthält, bezogen auf die Gesamtmasse der Funktionsschicht.

9. Kantenleiste nach einem der vorstehenden Ansprüche, **dadurch gekennzeichnet, dass** die Funktionsschicht mindestens einen Füllstoff enthält.

10. Kantenleiste nach einem der vorstehenden Ansprüche, **dadurch gekennzeichnet, dass** die Funktionsschicht mindestens einen Füllstoff, ausgewählt aus der Gruppe bestehend aus Füllstoffen auf Naturfaserbasis, insbesondere Holzfasern, Hanffaser, Bambusfasern, Sisalfasern, Reishülsen oder Kokosfasern, mineralischen Füllstoffen, insbesondere Talkum, Bariumsulfat, Calciumcarbonat, Dolomit, Siliciumdioxid, Glimmer, Kaolin, Diatomeenerde, Glass, Wollastonit, Calciumsulfat, Halloysit oder Zinkoxid, und Mischungen davon, enthält, insbesondere in einer Menge von 1 Gew.-% bis 40 Gew.-%, bevorzugt 1 Gew.-% bis 35 Gew.-%, weiter bevorzugt 1 Gew.-% bis 25 Gew.-%, besonders bevorzugt 1 Gew.-% bis 10 Gew.-%, bezogen auf die Gesamtmasse der Funktionsschicht.

11. Kantenleiste nach einem der vorstehenden Ansprüche, **dadurch gekennzeichnet, dass** die Funktionsschicht ein Additiv ausgewählt aus der Gruppe bestehend aus Antioxidantien, UV Absorbern, insbesondere hindered amine light stabilizers (HALS), Pigmente, Farbstoffe, Gleitschutzmittel, Antiblockmittel, Lichtstabilisatoren und Mischungen davon, enthält.

12. Kantenleiste nach einem der vorstehenden Ansprüche, **dadurch gekennzeichnet, dass** die Funktionsschicht Energie-absorbierende Zusatzstoffe, bevorzugt Licht- und/oder Strahlung-absorbierende Zusatzstoffe, weiter bevorzugt Laser-absorbierende Zusatzstoffe, enthält.

13. Kantenleiste nach einem der vorstehenden Ansprüche, **dadurch gekennzeichnet, dass** die Strukturschicht aus einem Werkstoff hergestellt ist, der Papier, Pappe, Furnier, continuous pressure laminate (CPL), oder ein thermoplastisches Material enthält, bevorzugt aus einem Werkstoff, der ein thermoplastisches Material, weiter bevorzugt ein thermoplastisches Polymer, besonders bevorzugt ein thermoplastisches Polymer ausgewählt aus der Gruppe bestehend aus Wood-Plastic-Composite, Polyethylen, Polyethylen aus biobasierten Substanzen, Polypropylen, Polypropylen aus biobasierten Substanzen, Polymilchsäure, Stärke, thermoplastische Stärke, Acrylnitril-butadien-Styrol-Copolymer, Acrylnitril-Styrol-Acrylat-Copolymer, Polyvinylchlorid, Polymethylmethacrylat, Polyethylentherephthalat, Olefin-basiertem thermoplastischem Elastomer, thermoplastischem Polyurethan, thermoplastischem Copolyester, Styrolblockcopolymere wie Styrol-Butadien-Styrol Copolymer, Styrol-Ethylen-Butylen-Styrol Copolymer, Styrol-Ethylen-Propylen-Styrol Copolymer, Styrol-Ethylen-Ethylen-Propylen-Styrol Copolymer, Poly(methylmethacrylat-co-Butadien-co-Styrol), thermoplastisches Copolyamid und Mischungen davon, enthält.

14. Kantenleiste nach einem der vorstehenden Ansprüche, **dadurch gekennzeichnet, dass** die Funktionsschicht mit der Strukturschicht durch Coextrusion verbunden ist.

15. Kantenleiste nach einem der vorstehenden Ansprüche, **dadurch gekennzeichnet, dass** die Funktionsschicht mit der Strukturschicht durch Postcoating, Postcoextrusion, Laminieren oder Heißbeschichten verbunden ist.

16. Kantenleiste nach einem der vorstehenden Ansprüche, **dadurch gekennzeichnet, dass** zwischen der Funktionsschicht und der Strukturschicht eine Haftvermittlerschicht angeordnet ist.

17. Verfahren zur Herstellung einer Kantenleiste, insbesondere für Möbelstücke, umfassend eine Strukturschicht und mindestens eine mit der Strukturschicht verbundene Funktionsschicht zum Befestigen der Kantenleiste an einer Schmalseite eines Werkstücks, insbesondere eines Möbelstücks, wobei die Funktionsschicht ein Polypropylenhomopolymer und ein Polyethylenhomopolymer enthält, umfassend
a. Formen, insbesondere Extrudieren, der mindestens einen das Polypropylenhomopolymer und das Polyethylenhomopolymer enthaltenden Funktionsschicht,
b. Formen, insbesondere Extrudieren, der Strukturschicht, und
c. Verbinden der Funktionsschicht mit der Strukturschicht.

18. Verfahren nach Anspruch 17, **dadurch gekennzeichnet, dass** die Funktionsschicht durch mindestens ein weiteres Merkmal der Ansprüche 2 bis 12 definiert ist, und/oder dass die Strukturschicht durch mindestens ein Merkmal von Anspruch 13 definiert ist, und/oder dass das Verfahren ein Verfahren zur Herstellung einer Kantenleiste gemäß einem der Ansprüche 1 bis 16 ist.

19. Verfahren nach einem der Ansprüche 17 oder 18, **dadurch gekennzeichnet, dass** die Funktionsschicht mit der Strukturschicht durch Coextrudieren verbunden wird oder dass die Funktionsschicht mit der Strukturschicht durch Postcoating, Postcoextrusion, Laminieren oder Heißbeschichten verbunden wird.

20. Verfahren nach einem der Ansprüche 17 bis 19, **dadurch gekennzeichnet, dass** eine Haftvermittlerschicht zwischen die Strukturschicht und die Funktionsschicht angebracht wird, insbesondere dass eine Haftvermittlerschicht auf die Strukturschicht und/oder auf die Funktionsschicht aufgebracht wird, vorzugsweise durch Coextrusion, Extrusion, insbesondere Postcoextrusion, oder durch Aufbringen einer haftvermittlerhaltigen Flüssigkeit.

21. Verfahren zum Befestigen einer Kantenleiste nach einem der Ansprüche 1 bis 16 an die Schmalseite eines Werkstücks, insbesondere eines Möbelstücks, wobei die Funktionsschicht durch Einwirkung von mindestens einem von Laserstrahlung, Mikrowellenstrahlung, Ultraschall, Infrarotstrahlung, Plasma und Heißluft aktiviert wird.

22. Verwendung einer wie in einem der Ansprüche 1 bis 12 definierten Funktionsschicht als bandförmiger Schmelzkitt, insbesondere beim Befestigen einer Leiste oder eines Bandes, insbesondere einer Leiste oder eines Bandes aus einem wie in Anspruch 13 beschriebenen Werkstoff, an eine Schmalseite eines Werkstücks, insbesondere eines Möbelstücks.

23. Werkstück, insbesondere Möbelstück, umfassend eine Kantenleiste nach einem der Ansprüche 1 bis 16.

24. Bandförmiger Schmelzkitt zum Befestigen einer Leiste oder eines Bandes an einer Schmalseite eines Werkstücks, insbesondere eines Möbelstücks, **dadurch gekennzeichnet, dass** der Schmelzkitt ein Polypropylenhomopolymer und ein Polyethylenhomopolymer enthält.

25. Schmelzkitt nach Anspruch 24, wobei der Schmelzkitt durch mindestens ein Merkmal der Funktionsschicht nach einem der Ansprüche 2 bis 12 weiter charakterisiert ist.

## Claims

1. Edge strip, in particular for pieces of furniture, comprising a structural layer and at least one functional layer for fastening the edge strip to a narrow side of a workpiece, in particular a piece of furniture, said functional layer being connected to the structural layer, **characterized in that** the functional layer contains a polypropylene homopolymer and a polyethylene homopolymer.

2. Edge strip according to claim 1, **characterized in that** the polypropylene homopolymer has a melt flow index of 100 g/10 min or more, preferably 150 g/10 min or more, more preferably 200 g/10 min or more, measured at 230°C with a weight of 2.16 kg according to DIN EN ISO 1133-1, in particular DIN EN ISO 1133-1:2021-03.

3. Edge strip according to any one of the preceding claims, **characterized in that** the polypropylene homopolymer has a melt flow index of 1200 g/10 min or less, preferably 900 g/10 min or less, more preferably 700 g/10 min or less, particularly preferably 500 g/10 min or less, measured at 230°C with a weight of 2.16 kg according to DIN EN ISO 1133-1.

4. Edge strip according to any one of the preceding claims, **characterized in that** the polyethylene homopolymer has a melt flow index of 200 g/10 min or less, preferably 150 g/10 min or less, more preferably 130 g/10 min or less, even more preferably 100 g/10 min or less, particularly preferably 70 g/10 min or less, measured at 190°C with a weight of 2.16 kg according to DIN EN ISO 1133-1, in particular DIN EN ISO 1133-1:2021-03.

5. Edge strip according to any one of the preceding claims, **characterized in that** the polyethylene homopolymer is a PE-LD, preferably a PE-LLD, and/or has a density of 0.900 g/cm³ to 0.940 g/cm³, preferably 0.910 g/cm³ to 0.936 g/cm³, and/or is a metallocene polyethylene homopolymer.

6. Edge strip according to any one of the preceding claims, **characterized in that** the functional layer has a thickness of 0.05 mm to 5 mm, preferably 0.05 mm to 2 mm, more preferably 0.05 mm to 1 mm, particularly preferably 0.1 mm to 0.25 mm.

7. Edge strip according to any one of the preceding claims, **characterized in that** the functional layer contains 40 wt.% to 99 wt.%, preferably 55 wt.% to 95 wt.%, more preferably 70 wt.% to 95 wt.%, particularly preferably 80 wt.% to 95 wt.%, of the polypropylene homopolymer, relative to the total mass of the functional layer.

8. Edge strip according to any one of the preceding claims, **characterized in that** the functional layer contains 0.1 wt.% to 40 wt.%, preferably 0.1 wt.% to 30 wt.%, more preferably 0.1 to 25 wt.%, even more preferably 1 wt.% to 20 wt.%, particularly preferably 1 wt.% to 10 wt.%, of the polyethylene homopolymer, relative to the total mass of the functional layer.

9. Edge strip according to any one of the preceding claims, **characterized in that** the functional layer contains at least one filler.

10. Edge strip according to any one of the preceding claims, **characterized in that** the functional layer contains at least one filler selected from the group consisting of natural-fiber-based fillers, in particular wood fibers, hemp fibers, bamboo fibers, sisal fibers, rice husks or coconut fibers, mineral fillers, in particular talc, barium sulfate, calcium carbonate, dolomite, silicon dioxide, mica, kaolin, diatomaceous earth, glass, wollastonite, calcium sulfate, halloysite or zinc oxide, and mixtures thereof, in particular in an amount of 1 wt.% to 40 wt.%, preferably 1 wt.% to 35 wt.%, more preferably 1 wt.% to 25 wt.%, particularly preferably 1 wt.% to 10 wt.%, relative to the total mass of the functional layer.

11. Edge strip according to any one of the preceding claims, **characterized in that** the functional layer contains an additive selected from the group consisting of antioxidants, UV absorbers, in particular hindered amine light stabilizers (HALSs), pigments, dyes, anti-slip agents, antiblocking agents, light stabilizers and mixtures thereof.

12. Edge strip according to any one of the preceding claims, **characterized in that** the functional layer contains energy-absorbing admixtures, preferably light- and/or radiation-absorbing admixtures, more preferably laser-absorbing admixtures.

13. Edge strip according to any one of the preceding claims, **characterized in that** the structural layer is made of a material which contains paper, cardboard, veneer, continuous pressure laminate (CPL) or a thermoplastic material, preferably of a material which contains a thermoplastic material, more preferably a thermoplastic polymer, particularly preferably a thermoplastic polymer selected from the group consisting of wood-plastic composite, polyethylene, polyethylene made from bio-based substances, polypropylene, polypropylene made from bio-based substances, polylactic acid, starch, thermoplastic starch, acrylonitrile-butadiene-styrene copolymer, acrylonitrile-styrene-acrylate copolymer, polyvinyl chloride, polymethyl methacrylate, polyethylene terephthalate, olefin-based thermoplastic elastomer, thermoplastic polyurethane, thermoplastic copolyester, styrene block copolymers such as styrene-butadiene-styrene copolymer, styrene-ethylenebutylene-styrene copolymer, styrene-ethylene-propylene-styrene copolymer, styrene-ethylene-ethylene-propylene-styrene copolymer, poly(methyl methacrylate-co-butadiene-co-styrene), thermoplastic copolyamide and mixtures thereof.

14. Edge strip according to any one of the preceding claims, **characterized in that** the functional layer is connected to the structural layer by coextrusion.

15. Edge strip according to any one of the preceding claims, **characterized in that** the functional layer is connected to the structural layer by post-coating, postcoextrusion, lamination or hot coating.

16. Edge strip according to any one of the preceding claims, **characterized in that** an adhesion promoter layer is arranged between the functional layer and the structural layer.

17. Method for producing an edge strip, in particular for pieces of furniture, comprising a structural layer and at least one functional layer for fastening the edge strip to a narrow side of a workpiece, in particular a piece of furniture, said functional layer being connected to the structural layer and containing a polypropylene homopolymer and a polyethylene homopolymer, and said method comprising
a. forming, in particular extruding, the at least one functional layer containing the polypropylene homopolymer and the polyethylene homopolymer,
b. forming, in particular extruding, the structural layer, and
c. connecting the functional layer to the structural layer.

18. Method according to claim 17, **characterized in that** the functional layer is defined by at least one further feature of claims 2 to 12, and/or **in that** the structural layer is defined by at least one feature of claim 13, and/or **in that** the method is a method for producing an edge strip according to any one of claims 1 to 16.

19. Method according to any one of claims 17 and 18, **characterized in that** the functional layer is connected to the structural layer by coextrusion or **in that** the functional layer is connected to the structural layer by post-coating, postcoextrusion, lamination or hot coating.

20. Method according to any one of claims 17 to 19, **characterized in that** an adhesion promoter layer is provided between the structural layer and the functional layer, in particular **in that** an adhesion promoter layer is applied to the structural layer and/or to the functional layer, preferably by coextrusion, extrusion, in particular post-coextrusion, or by application of an adhesion-promoter-containing liquid.

21. Method for fastening an edge strip according to any one of claims 1 to 16 to the narrow side of a workpiece, in particular a piece of furniture, wherein the functional layer is activated by the effect of at least one of laser radiation, microwave radiation, ultrasound, infrared radiation, plasma and hot air.

22. Use of a functional layer as defined in any one of claims 1 to 12 as a band-shaped hot-melt cement, in particular in the fastening of a strip or a band, in particular a strip or a band made of a material as described in claim 13, to a narrow side of a workpiece, in particular a piece of furniture.

23. Workpiece, in particular piece of furniture, comprising an edge strip according to any one of claims 1 to 16.

24. Band-shaped hot-melt cement for fastening a strip or a band to a narrow side of a workpiece, in particular a piece of furniture, **characterized in that** the hot-melt cement contains a polypropylene homopolymer and a polyethylene homopolymer.

25. Hot-melt cement according to claim 24, the hot-melt cement being further **characterized by** at least one feature of the functional layer according to any one of claims 2 to 12.

## Revendications

1. Bande de chant, en particulier pour des meubles, comprenant une couche structurale et au moins une couche fonctionnelle reliée à la couche structurale pour la fixation de la bande de chant sur un côté étroit d'une pièce, en particulier d'un meuble, **caractérisée en ce que** la couche fonctionnelle contient un homopolymère de polypropylène et un homopolymère de polyéthylène.

2. Bande de chant selon la revendication 1, **caractérisée en ce que** l'homopolymère de polypropylène présente un indice de fluidité à chaud de 100 g/10 min ou plus, de préférence de 150 g/10 min ou plus, plus préférablement de 200 g/10 min ou plus, mesuré à 230 °C avec un poids de 2,16 kg selon la norme DIN EN ISO 1133-1, en particulier la norme DIN EN ISO 1133-1:2021-03.

3. Bande de chant selon l'une des revendications précédentes,
**caractérisée en ce que** l'homopolymère de polypropylène présente un indice de fluidité à chaud de 1 200 g/10 min ou moins, de préférence de 900 g/10 min ou moins, plus préférablement de 700 g/10 min ou moins, de manière particulièrement préférée de 500 g/10 min ou moins, mesuré à 230 °C avec un poids de 2,16 kg selon la norme DIN EN ISO 1133-1.

4. Bande de chant selon l'une des revendications précédentes,
**caractérisée en ce que** l'homopolymère de polyéthylène présente un indice de fluidité à chaud de 200 g/10 min ou moins, de préférence de 150 g/10 min ou moins, plus préférablement de 130 g/10 min ou moins, encore plus préférablement de 100 g/10 min ou moins, de manière particulièrement préférée de 70 g/10 min ou moins, mesuré à 190 °C avec un poids de 2,16 kg selon la norme DIN EN ISO 1133-1, en particulier la norme DIN EN ISO 1133-1:2021 -03.

5. Bande de chant selon l'une des revendications précédentes,
**caractérisée en ce que** l'homopolymère de polyéthylène est un PE-LD, de préférence un PE-LLD, et/ou présente une densité allant de 0,900 g/cm³ à 0,940 g/cm³, de préférence de 0,910 g/cm³ à 0,936 g/cm³, et/ou est un homopolymère de polyéthylène métallocène.

6. Bande de chant selon l'une des revendications précédentes,
**caractérisée en ce que** la couche fonctionnelle présente une épaisseur allant de 0,05 mm à 5 mm, de préférence de 0,05 mm à 2 mm, plus préférablement de 0,05 mm à 1 mm, de manière particulièrement préférée de 0,1 mm à 0,25 mm.

7. Bande de chant selon l'une des revendications précédentes,
**caractérisée en ce que** la couche fonctionnelle contient 40 % en poids à 99 % en poids, de préférence 55 % en poids à 95 % en poids, plus préférablement 70 % en poids à 95 % en poids, de manière particulièrement préférée 80 % en poids à 95 % en poids de l'homopolymère de polypropylène, par rapport à la masse totale de la couche fonctionnelle.

8. Bande de chant selon l'une des revendications précédentes,
**caractérisée en ce que** la couche fonctionnelle contient 0,1 % en poids à 40 % en poids, de préférence 0,1 % en poids à 30 % en poids, plus préférablement 0,1 à 25 % en poids, encore plus préférablement 1 % en poids à 20 % en poids, de manière particulièrement préférée 1 % en poids à 10 % en poids de l'homopolymère de polyéthylène, par rapport à la masse totale de la couche fonctionnelle.

9. Bande de chant selon l'une des revendications précédentes,
**caractérisée en ce que** la couche fonctionnelle contient au moins une charge.

10. Bande de chant selon l'une des revendications précédentes,
**caractérisée en ce que** la couche fonctionnelle contient au moins une charge choisie dans le groupe constitué de charges à base de fibres naturelles, en particulier fibres de bois, fibres de chanvre, fibres de bambou, fibres de sisal, balle de riz ou fibres de coco, charges minérales, en particulier talc, sulfate de baryum, carbonate de calcium, dolomite, dioxyde de silicium, mica, kaolin, terre de diatomée, verre, wollastonite, sulfate de calcium, halloysite ou oxyde de zinc, et des mélanges de ceux-ci, en particulier en une quantité allant de 1 % en poids à 40 % en poids, de préférence de 1 % en poids à 35 % en poids, plus préférablement de 1 % en poids à 25 % en poids, de manière particulièrement préférée de 1 % en poids à 10 % en poids, par rapport à la masse totale de la couche fonctionnelle.

11. Bande de chant selon l'une des revendications précédentes,
**caractérisée en ce que** la couche fonctionnelle contient un additif choisi dans le groupe constitué d'antioxydants, absorbeurs d'UV, en particulier photostabilisants à amine encombrée (« hindered amine light stabilizers », HALS), pigments, colorants, agents antidérapants, agents antiblocage, stabilisateurs de lumière et des mélanges de ceux-ci.

12. Bande de chant selon l'une des revendications précédentes,
**caractérisée en ce que** la couche fonctionnelle contient des additifs absorbant l'énergie, de préférence des additifs absorbant la lumière et/ou le rayonnement, plus préférablement des additifs absorbant le laser.

13. Bande de chant selon l'une des revendications précédentes,
**caractérisée en ce que** la couche structurale est fabriquée à partir d'une matière qui contient du papier, carton, placage, stratifié à pression continue (« continuous pressure laminate », CPL), ou un matériau thermoplastique, de préférence à partir d'une matière qui contient un matériau thermoplastique, plus préférablement un polymère thermoplastique, de manière particulièrement préférée un polymère thermoplastique choisi dans le groupe constitué de composites bois-plastique, polyéthylène, polyéthylène issu de substances biosourcées, polypropylène, polypropylène issu de substances biosourcées, acide polylactique, amidon, amidon thermoplastique, copolymère acrylonitrile-butadiène-styrène, copolymère acrylonitrile-styrène-acrylate, chlorure de polyvinyle, polyméthacrylate de méthyle, polyéthylène téréphtalate, élastomère thermoplastique à base d'oléfine, polyuréthane thermoplastique, copolyester thermoplastique, copolymères séquencés de styrène tels que copolymère styrène-butadiène-styrène, copolymère styrène-éthylène-butylène-styrène, copolymère styrène-éthylène-propylène-styrène, copolymère styrène-éthylène-éthylène-propylène-styrène, poly(méthacrylate de méthyle-co-butadiène-co-styrène), copolyamide thermoplastique et des mélanges de ceux-ci.

14. Bande de chant selon l'une des revendications précédentes,
**caractérisée en ce que** la couche fonctionnelle est reliée à la couche structurale par coextrusion.

15. Bande de chant selon l'une des revendications précédentes,
**caractérisée en ce que** la couche fonctionnelle est reliée à la couche structurale par post-revêtement, post-extrusion, laminage ou revêtement à chaud.

16. Bande de chant selon l'une des revendications précédentes,
**caractérisée en ce qu'**une couche d'agent adhésif est disposée entre la couche fonctionnelle et la couche structurale.

17. Procédé pour la fabrication d'une bande de chant, en particulier pour des meubles, comprenant une couche structurale et au moins une couche fonctionnelle reliée à la couche structurale pour la fixation de la bande de chant sur un côté étroit d'une pièce, en particulier d'un meuble, dans lequel la couche fonctionnelle contient un homopolymère de polypropylène et un homopolymère de polyéthylène, comprenant
a. le moulage, en particulier l'extrusion, de l'au moins une couche fonctionnelle contenant l'homopolymère de polypropylène et l'homopolymère de polyéthylène,
b. le moulage, en particulier l'extrusion, de la couche structurale, et
c. la liaison de la couche fonctionnelle à la couche structurale.

18. Procédé selon la revendication 17, **caractérisé en ce que** la couche fonctionnelle est définie par au moins une autre caractéristique des revendications 2 à 12, **et/ou en ce que** la couche structurale est définie par au moins une caractéristique de la revendication 13, **et/ou en ce que** le procédé est un procédé pour la fabrication d'une bande de chant selon l'une des revendications 1 à 16.

19. Procédé selon l'une des revendications 17 ou 18, **caractérisé en ce que** la couche fonctionnelle est reliée à la couche structurale par coextrusion, **ou en ce que** la couche fonctionnelle est reliée à la couche structurale par post-revêtement, post-coextrusion, laminage ou revêtement à chaud.

20. Procédé selon l'une des revendications 17 à 19, **caractérisé en ce qu'**une couche d'agent adhésif est appliquée entre la couche structurale et la couche fonctionnelle, en particulier **en ce qu'**une couche d'agent adhésif est appliquée sur la couche structurale et/ou sur la couche fonctionnelle, de préférence par coextrusion, extrusion, en particulier post-coextrusion, ou par application d'un liquide contenant un agent adhésif.

21. Procédé pour la fixation d'une bande de chant selon l'une des revendications 1 à 16 sur le côté étroit d'une pièce, en particulier d'un meuble, dans lequel la couche fonctionnelle est activée par l'action d'au moins l'un parmi un rayonnement laser, un rayonnement micro-ondes, des ultrasons, un rayonnement infrarouge, un plasma et de l'air chaud.

22. Utilisation d'une couche fonctionnelle telle que définie dans l'une des revendications 1 à 12 en tant que mastic fusible en forme de bande, en particulier lors de la fixation d'une baguette ou d'une bande, en particulier d'une baguette ou d'une bande en un matériau tel que décrit dans la revendication 13, sur un côté étroit d'une pièce, en particulier d'un meuble.

23. Pièce, en particulier meuble, comprenant une bande de chant selon l'une des revendications 1 à 16.

24. Mastic fusible en forme de bande pour la fixation d'une baguette ou d'une bande sur un côté étroit d'une pièce, en particulier d'un meuble,
**caractérisé en ce que** le mastic fusible contient un homopolymère de polypropylène et un homopolymère de polyéthylène.

25. Mastic fusible selon la revendication 24, dans lequel le mastic fusible est en outre **caractérisé par** au moins une caractéristique de la couche fonctionnelle selon l'une des revendications 2 à 12.
